(19) **Europäisches Patentamt**
**European Patent Office**
**Office européen des brevets**

(11) **EP 3 211 925 A1**

(12) **EUROPEAN PATENT APPLICATION**
published in accordance with Art. 153(4) EPC

(43) Date of publication:
**30.08.2017 Bulletin 2017/35**

(51) Int Cl.:
***H04W 4/12*** *(2009.01)*

(21) Application number: **15841242.9**

(22) Date of filing: **18.09.2015**

(86) International application number:
**PCT/CN2015/089909**

(87) International publication number:
**WO 2016/041517 (24.03.2016 Gazette 2016/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **18.09.2014 CN 201410477689**

(71) Applicant: **Shanghai Chule (CooTek) Information Technology Co., Ltd Shanghai 200233 (CN)**

(72) Inventors:
• **ZHANG, Kan**
  **Shanghai 200233 (CN)**

• **LIU, Hongjun**
  **Shanghai 200233 (CN)**
• **ZENG, Lingwei**
  **Shanghai 200233 (CN)**
• **YUAN, Chuanshun**
  **Shanghai 200233 (CN)**
• **MENG, Lei**
  **Shanghai 200233 (CN)**
• **ZHANG, Junhao**
  **Shanghai 200233 (CN)**
• **WANG, Chong**
  **Shanghai 200233 (CN)**
• **ZHANG, Jiaoyang**
  **Shanghai 200233 (CN)**

(74) Representative: **Kolster Oy Ab**
**Salmisaarenaukio 1**
**00180 Helsinki (FI)**

(54) **SMART REMINDING METHOD, SYSTEM AND APPARATUS**

(57)    A smart reminding method and system, wherein the smart reminding system comprises: a message receiving device (110) for receiving a push message (101) associated with a set account; a detection device (120) for detecting the push message (101) according to classification associated feature data in the received push message (101), so as to acquire reminding messages and demarcate the reminding messages as different types, wherein each type of reminding message is associated with at least one action; and a reminding device (140) for reminding a user according to the reminding messages. The method can effectively acquire, based on the classification associated feature data in the push message (101), the reminding messages from the push message and classify the reminding messages, and execute the associated action based on the type of the reminding message, thereby realizing smart reminding and improving user experience.

EP 3 211 925 A1

101

110

Sender: XXXXXXXXX
Content: XXXXXX
XXXXXXXXXXXXX

Detection
Means

120

130

Cloud Detection Means

140

Reminder Means

110

150

Action 1     Action 2     ...     Action n

**FIG. 1**

## Description

Technical Field

The present invention relates to the field of interaction between electronic devices and human users, more particularly, to the field of electronic device-based intelligent reminding, and still more specifically, to intelligent reminder methods and systems.

Background Art

In recent years, with the widespread adoption of smart phones, it has become an increasingly common practice of merchants to disseminate their information via Short Message Service (SMS) or social media accounts. In these push messages, in addition to those indeed containing information of users' interest or serving as reminders to users such as, for example, delivery notification messages, railway ticket booking confirmation messages, messages serving as proofs of purchase of group purchase coupons and phone bill messages, there are also a huge number of spam messages. As a result, users' cell phones or electronic communication terminals are often flooded by numerous advertising or other spam messages which are not reminder messages, and the users usually have to spend a lot of time to read a great number of such specious push messages in order to identify those really useful to them. This does not only lead to a reduced efficiency but also often causes omission of important messages and thus inconvenience in the users' work or lives.

In addition, the merchants may carry out the notification or reminding using different software. For instances, some of the merchants uses SMS messages, and there are also some relying on Facebook or Wechat accounts or emails. For the users, there is not any versatile mechanism for handling all the push messages in diversified forms delivered from distinct merchants, not to mention a versatile reminding mechanism established based on the push messages in various forms.

In order to overcome the above-described problems, there is a need for a more intelligent reminder method, system and apparatus for use in electronic devices.

Summary

The technical problem to be solved by the present invention is to obtain reminder messages from push messages received by an electronic device and realize intelligent reminding.

According to one aspect of the invention, there is provided an intelligent reminder method, comprising: obtaining push messages received by an electronic device terminal, wherein the push messages comprises reminder messages, the reminder messages comprising classification-related feature data; based on the classification-related feature data, filtering the push messages to obtain the reminder messages and labelling the reminder messages into different categories, wherein each of the reminder message categories is associated with at least one action; and based on the different reminder message categories, carrying out the actions associated with the reminder message categories.

According to another aspect of the invention, there is further provided an intelligent reminder system comprising: message reception means, for receiving push messages associated with predetermined accounts; detection means, for, based on classification-related feature data in the push messages, examining the push messages to obtain reminder messages and labelling the reminder messages into different categories, wherein reminder messages in each of the categories are associated with at least one action; and reminder means for reminding a user based on the reminder messages.

Compared to the prior art, the present invention fully takes into account the characteristics of reminder messages, subjects the push messages to processing based on classification-related feature data so as to obtain reminder messages therefrom, classifies the reminder messages into different categories, and carries out actions corresponding to the different categories according to user inputs, thereby achieving intelligent reminding based upon the push messages.

Brief Description of the Drawings

Other features, objects and advantages of the invention will become more apparent upon reading the detailed description of several non-limiting embodiments taken in conjunction with the accompanying drawings, in which:

FIG. 1 is a block diagram schematically illustrating an intelligent reminder system in accordance with one embodiment of the present invention;

FIG. 2 is a schematic illustration of the structure of an intelligent reminder system in accordance with one embodiment of the present invention;

FIG. 3 is a schematic illustrating an exemplary data structure of reminder messages stored in a local database in accordance with one embodiment of the present invention;

FIG. 4 and 5 are schematic illustrations of processors of different structures in accordance with embodiments of the present invention;

FIG. 6 is a schematic illustration of the structure of a processor in accordance with another embodiment of the present invention;

FIG. 7 schematically illustrates operations of a specific embodiment of classification means shown in FIG. 6.

FIG. 8 is a schematic illustration of the structure of an intelligent reminder system in accordance with another embodiment of the present invention;

FIG. 9 and 10 schematically illustrate how reminder means reminds a user using different interfaces in accordance with specific embodiments of the present invention;

FIG. 11 is a schematic illustration of the structure of an intelligent reminder system in accordance with yet another embodiment of the present invention;

FIGS. 12 to 14 schematically illustrate operations of an intelligent reminder system in accordance with still another embodiment of the present invention; and

FIG. 15 depicts a flowchart graphically illustrating an intelligent reminder method in accordance with one embodiment of the present invention.

Detailed Description

Exemplary embodiments of intelligent reminder methods and systems according to the present invention will be explained more fully below with reference to the accompanying drawings in which the same reference symbols in different drawings are used to indicate similar or identical items. Although a few exemplary embodiments and features of the present invention are set forth below, modifications, alterations and other substitutions made to the invention without departing the concept thereof such as, for example, equivalent substitutions, additions or modifications to element(s) illustrated in the drawings, or substitutions, rearrangements or additions of steps, shall not be construed as limiting the present invention, and the proper scope of the invention shall be as defined in the appended claims.

According to some embodiments, intelligent reminder systems according to the present invention can be configured to examine push messages received in an electronic device through extracting classification-related feature data from the push messages, identify those of the push messages meeting criteria as reminder messages for notifying a user, group the reminder messages into different categories based on the classification-related feature data, and in the event of the user selecting one of the reminder messages, based on the category of the selected reminder message, carry out action(s) associated with its category.

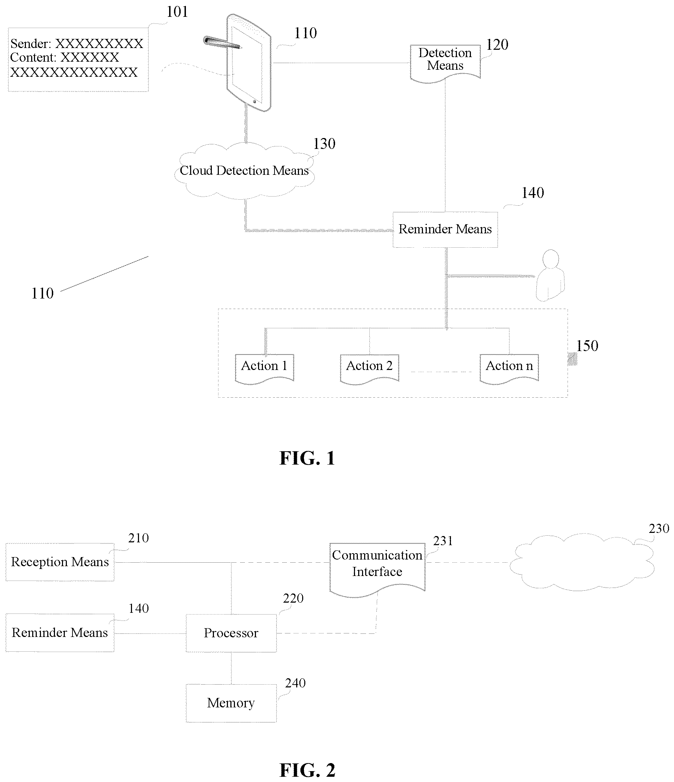

FIG. 1 is a block diagram illustrating an exemplary intelligent reminder system 100. According to some embodiments, the intelligent reminder system 100 may include an electronic device 110 which may be implemented as an electronic communication device having the function of receiving messages, such as for example, a cell phone, smart phone or PDA, or as a networked electronic device capable of receiving messages associated with predefined accounts, such as for example, a tablet computer, camera, wearable electronic device, car navigation system or interactive electronic terminal deployed in a public place such as, for example, a traffic station or school.

The electronic device 110 may be either connected to a telecommunication network utilizing, for example, CDMA, 2G, 3G or 4G schemes and receive push messages 101 from the telecommunication network, or connected to the Internet through a broadband connection such as, for example, a ADSL, VDSL, fiber optic, wireless, cable TV or satellite connection, or through a narrowband connection such as, for example, a PSTN, GPRS, 2G or 3G connection and receive push messages 101 associated with some predefined accounts.

The push messages 101 referenced herein may be Short Message Service (SMS) messages such as, for example, advertising or reminder messages sent from merchants via base stations to a Short Message Service Center (SMSC) and further to the user's cell phone via a GMS network or an SMS gateway, so that the user can receive and open the messages with the cell phone and view them on a screen thereof. The push messages 101 may also be messages associated with predefined accounts such as, for example, those sent to a certain e-mail address or to an iTune, Facebook, Wechat, QQ, or other account. After the messages reach a designated electronic device or account, the user can receive them by the device or account.

Subsequently, detection means 120 or cloud detection means 130 may examine the push messages 101 received in the electronic device 110 by extracting classification-related feature data therefrom such as to preclude non-reminder messages and obtain reminder messages and label the reminder messages into different categories, and reminder means 140 may notify the user, wherein reminder messages in each of the categories are associated with at least one actions.

According to some embodiments of the present invention, the detection means 120 may parse all SMS messages obtained in the cell phone, or a predetermined proportion such as, for example, from 1% to 30%, of the messages, or those of the messages meeting predetermined filtration criteria such as, for example, only those from non-phonebook contacts, or only those containing predetermined contents such as, for example, "balance", "Yuan" or "remaining balance", or only those from predetermined sender numbers such as, for example, 100861.

According to some embodiments, from the SMS messages to be parsed, the detection means 120 can extract classification-related feature data which can identify of different message categories, such that reminder messages can be obtained and labelled into different categories.

In one embodiment, the detection means 120 may label the SMS messages to be parsed into different categories depending on whether they contain predetermined classification-related feature data or not. The classification-related feature data may include strings consisting of keywords in the messages or synonymous words or phrases thereof, or be message sender numbers, Short Message Base Station Service Center (SMBSSC) codes, or a combination of these feature data.

For example, the detection means 120 can label SMS messages as payment reminder messages when detecting therein the presence of, for example, strings containing the keywords "Yuan", "remaining balance", "less than" or synonymous words or phrases thereof, or as delivery notification messages when detecting therein the presence of, for example, strings containing the keywords "express delivery", "includes", "shipped out" "tracking number" or synonymous words or phrases thereof.

As another example, upon the detection means 120 extracting the sender number from a SMS message as, for example, "1-800-604-9961", it may identify the number as the customer service number of the Bank of America and accordingly label the message as a bank notification message.

As a further example, Short Message Base Station Service Center (SMBSSC) codes may also serve as the classification-related feature data, according to which, the detection means 120 may examine the push messages so as to obtain the reminder messages and then label them.

In another embodiment, the detection means 120 may also determine proportions of the classification-related feature data corresponding to the different categories in the SMS messages to be parsed and thereby accomplish labelling the messages into the categories.

In still another embodiment, the detection means 120 may also perform semantic analysis or regular expression matching on the messages to determine whether there are contents identical or similar to classification-related feature data corresponding to predetermined categories and, if positive, label the messages into the respective categories.

The detection means 120 can further detect an input signal of the user and, in the event of the signal indicative of the user's selection of one of the reminder messages, carry out action(s) 150 associated with the category to which the selected reminder message belongs. For example, with the reminder means 140 having reminded the user and in the case of the user being detected to select a payment reminder message, action(s) associated with the category "Payment" may be obtained and carried out. For example, a link to a corresponding payment interface may be opened to allow the user to directly fulfill the payment or recharge requirements.

According to some embodiments, the detection means 120 or cloud detection means 130 may be an executable program that can be read and run by a computer processor. For example, the detection means 120 may be deployed in the electronic device 110 and receive and obtain the push messages 101 through monitoring incoming messages of the electronic device 110. As another example, the cloud detection means 130 may be deployed in a cloud server and obtain the push messages 101 received in the electronic device 110 from network transmissions. According to some other embodiments, the intelligent reminder system 100 may include both of the local detection means 120 and the cloud detection means 130 which are configured to successively or simultaneously examine the push messages received in the electronic device 110, depending on system settings or network conditions.

The reminder messages are further transmitted to the reminder means 140 which then reminds the user based on the messages in the form of videos or audios. For example, the reminder means 140 may comprise one or more textual or graphical screens or other display devices and programs for driving the display devices and display the reminder messages to the user, or comprise a sound device such as a speaker or a program for driving the sound device and present the reminder messages in the form of speech, or comprise means for performing other reminding functions, for example, by indication lamps, vibration, etc.

FIG. 2 schematically shows the structure of the intelligent reminder system 100. According to some embodiments, the intelligent reminder system 100 may include reception means 210, a processor 220, a memory 240 and the reminder means 140.

The processor 220 may be a Central Processing Unit (CPU) or a Graphics Processing Unit (GPU). Specifically, the processor 220 may further comprise one or more printed circuit boards (PCBs) or microprocessor chips configured to perform computer program instruction sequences so as to implement a variety of methods described in further detail below. In some embodiments, the processor 220 may be configured to receive push messages from the reception means 210, filter the push messages based on classification-related feature data contained therein to obtain reminder messages from the push messages, store the reminder messages in the memory 240, label the reminder messages into different categories and monitor whether any of the reminder messages is selected. In addition, upon selection of one of the reminder messages being detected, action(s) associated with the category of the selected reminder message is obtained from the memory 240 and carried out.

The memory 240 may comprise one or more of a random access memory (RAM) and a read-only memory (ROM). Computer program instructions to be executed by the processor 220 may be accessed or read from the ROM or any other suitable memory location and loaded in the RAM. For example, the memory 240 may store one or more software applications. The software applications stored in the memory 240 may include operating systems for conventional computer systems and software-controlled devices. In addition, the memory 240 may store an entire software application or only part thereof executable by the processor 220. For example, the memory 240 can store intelligent reminder software executable by the processor 220 and implement the intelligent reminder method.

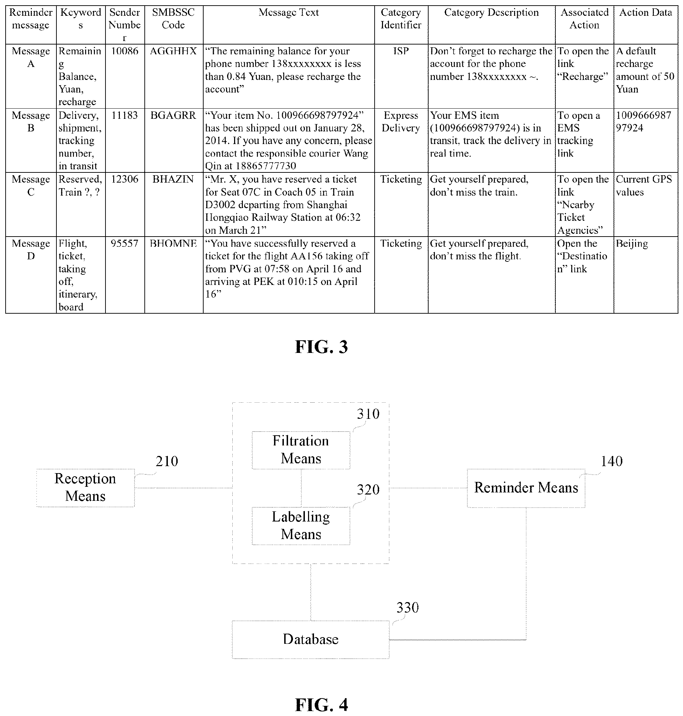

In some embodiments, the memory 240 may also store one or more of master data, user data, application data and program codes. For example, the memory 240 can store a local database 330. In some embodiments, the local database 330 may include one or more reminder messages. For example, FIG. 3 shows exemplary reminder messages each including one or more data fields which store information describing a category indicated by the reminder message and action(s) associated therewith, for example, classification-related feature data of a category to which the reminder message belongs such as, for example, keywords, a sender number, a Short Message Base Station Service Center (SMBSSC) code and message text, or category information associated with the reminder message, such as, for example, a category identifier and category description, or information about action(s) associated with the reminder message, such as, for example, description and data of the action(s). The database may broadly comprise any data format for data storage.

In some embodiments, the reception means 210 and the reminder means 140 may be coupled to the processor 220 by suitable interface circuitry. In some embodiments, the reception means 210 may be means for receiving SMS messages or mails or reception means for use with other communications software.

According to some embodiments, the intelligent reminder system 100 can further comprises a communication interface 231 which can provide a communication connection allowing information exchanges between the intelligent reminder system 100 and some external devices. According to one embodiment, the communication interface 231 may include a network interface (not shown) configured to transmit information to a cloud service 230 and receive information therefrom. According to some embodiments, the cloud service 230 may be implemented as a web service on the Internet, a cloud storage service or the like.

Referring to Figure 4, according to some embodiments of the present invention, the processor 220 may further comprise filtration means 310 and labelling means 320, wherein the reception means 210 receives push messages and sends them to the filtration means 310; the filtration means 310 then filters the push messages to obtain reminder messages; and the labelling means 320 labels the reminder messages based on classification-related feature data such that the reminder messages are divided into different categories each of which is associated in the database 330 with at least one predetermined action. In addition, the reminder messages having been processed by the filtration means 310 and the labelling means 320 are transmitted to the reminder means 140 and utilized thereby for reminding.

In one specific embodiment, the reception means 210 receives N push messages within a first time threshold and transmits these push messages to the filtration means 310.

After that, the filtration means 310 filters all of the push messages in a predetermined manner so as to obtain reminder messages therefrom.

The filtration means 310 may filter the push messages based on classification-related feature data. For example, the filtration means 310 may filter the push messages based on SMS message sender numbers such as to preclude those of the push messages from phonebook contacts and identify those from non-phonebook contacts as reminder messages. Alternatively, the filtration means 310 may also filter the push messages based on keywords in SMS messages or their combinations. For example, the filtration means 310 may identify those of the SMS messages whose text contains the predetermined keywords "balance", "amount" and "insufficient" or synonymous words or phrases thereof as the reminder messages. Still alternatively, the filtration means 310 may also filter the push messages based on SMSC codes. For example, the filtration means 310 may preclude some push messages from pseudo base stations, in order to avoid reminding the user with fraud SMS messages as the reminder messages. In addition, the filtration means 310 may also perform repeated filtration based on classification-related feature data of multiple types.

In another embodiment, filtration means 310 may also filter a predetermined proportion of the push messages. For example, the filtration means 310 may perform the classification-related feature data-based filtration on 1% to 30% of the push messages.

The reminder messages filtered from the filtration means 310 are further labelled into different categories by the labelling means 320 also based on the classification-related feature data.

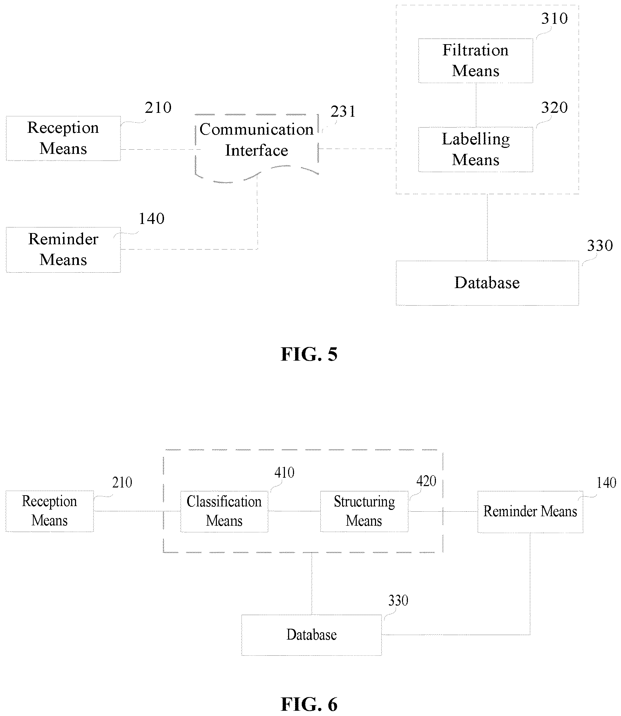

The filtration means 310, labelling means 320 and database 330 may be deployed locally, for example, on the same user terminal as the reception means 210 and reminder means 140. According to some other embodiments, referring to FIG. 5, it is also possible for the filtration means 310, labelling means 320 and database 330 to be deployed on a cloud and communicate data and signals with the reception means 210 or reminder means 140 via communication interfaces.

According to some embodiments, referring to FIG. 6, the processor 220 may further comprise classification means 410 and structuring means 420, wherein the classification means 410 receives push messages from the reception means 210, filters and classifies them based on classification-related feature data, and sends the obtained reminder messages, as well as their corresponding categories, to the structuring means 420; and the structuring means 420 forms the reminder messages into reminder messages having predetermined structures comprising the corresponding categories of the reminder messages. In addition, the structuring means 420 further sends the reminder messages having the predetermined structure to the reminder means 140, as well as to the database 330 for storage.

In one embodiment, the classification means 410 may further comprise a first classifier which filters and examines the push messages and in the event of having detected the presence of predetermined classification-related feature data in a push message, labels the push message as a reminder message belonging to a category associated with the classification-related feature data.

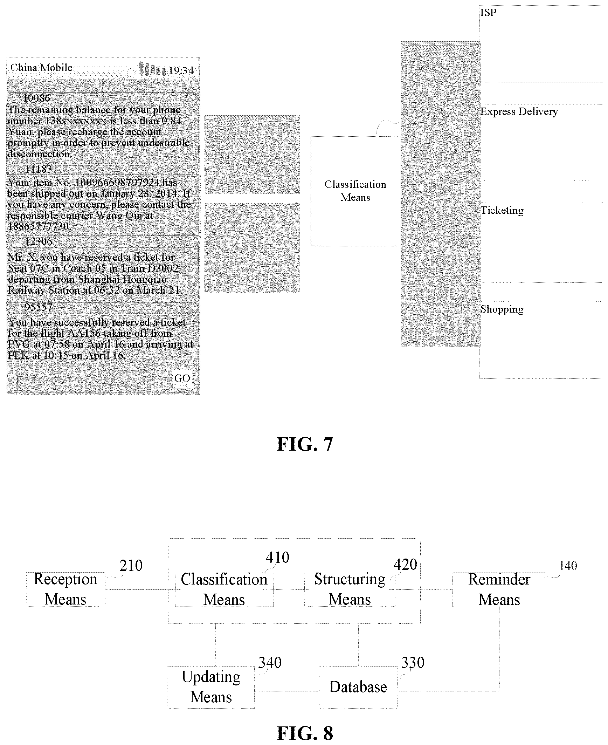

For example, referring to FIG. 7, the first classifier may filter and examine received push messages and label them as reminder messages belonging to the category "Ticketing" when detecting the presence of classification-related feature data therein such as "reserved", "Train ?", "Coach ?", "departing at ?", "railway", "flight|ticket|itinerary", "taking off", "board", etc., where, as used herein, the wildcard "?" indicates one or more characters and in other embodiments, other characters may also be used as the wildcard, or as reminder messages belonging to the category "Shopping" when detecting the presence of classification-related feature data therein such as "seller", "buyer", "order", "group purchase", "? Coupon", etc., or as reminder messages belonging to the category "Express Delivery" when detecting the presence of classification-related feature data therein such as "tracking number", "shipment", "in transit", etc., or as reminder messages belonging to the category "ISP" when detecting the presence of classification-related feature data such as "balance", "less than", "Yuan", etc. in the push messages sent from the numbers such as "10086?", "10001?", "10011?", etc.

According to some embodiments, the first classifier may consecutively filter the push messages based on their categories. For example, the first classifier may first determine whether a received SMS message is a reminder message belonging to the category "ISP" and, if negative, continue to determine whether it is a reminder message belonging to other categories, until one of the categories corresponding to the SMS message is obtained. In one embodiment, when the push message is found to not belong to any of the categories, it is determined as a non-reminder message.

According to some embodiments, the first classifier can further comprise an extraction module and a determination module. In one embodiment, the extraction module may extract the classification-related feature data from the push messages according to types of the data, followed by the determination module performing the determination in a consecutive manner. For example, the extraction module may first extract sender numbers from all SMS messages, followed by the determination module determining whether the sender numbers of the SMS messages belong to the category "ISP", i.e., containing "10086?", or "10001?", or "10011?". After that, the extraction module may extract Short Message Base Station Service Center (SMBSSC) codes or message text from those of the SMS messages with their sender numbers not belonging to the category "ISP", followed by the determination module performing the corresponding determination, until the categories of the SMS messages have been obtained. In another embodiment, the first classifier may perform the determination in a manner of one SMS message after another. For example, the extraction module may extract sender numbers, Short Message Base Station Service Center (SMBSSC) codes and message text corresponding to the SMS messages, followed by the determination module determining the categories to which the SMS messages belong based on the extracted data. In some embodiments, the determination module may perform direct determination based on a certain type of classification-related feature data or a certain classification-related feature datum. For example, when the determination module has detected the keyword "railway" or "flight" in the text of a SMS message, it can determine the SMS message as a reminder message of the category "Ticketing". In some embodiments, the determination module may perform the determination based on a combination of several classification-related feature data. For example, the determination module may determine a SMS message as a reminder message of the category "Ticketing" only when its text contains both "balance" and "less than" and its sender number is "10086".

According to some embodiments, the classification means 420 may further comprise a second classifier which extracts classification-related feature data from received push messages, calculates probabilities of the push messages belonging to the categories and labels the push messages into the respective corresponding categories.

For example, in the case of the second classifier extracting classification-related feature data from an i-th push message as $\{x_{1i}, x_{2i}, ..., x_{ni}\}$, as the category A, category B, ..., and category n correspond to weight values A, weight values B, ..., and weight values n, respectively, where the weight values A are $\{w_{A0}, w_{Ai}, ..., w_{An}\}$, the weight values B are $\{w_{B0}, w_{B1}, ..., w_{Bn}\}$, ..., and the weight values n are $\{w_{n0}, w_{n1}, ..., w_{nn}\}$, the second classifier can calculate probabilities of the push message belonging to the respective categories.

Specifically, the second classifier may calculate a probability of the push message belonging to the category A as:

$$P_A(y_i = 1 \mid x_i) = \frac{1}{1 + e^{-f_A(x_i)}},$$

where, $f_A(x_i) = w_{A0} + w_{A1} \bullet x_{1i} + w_{A2} \bullet x_{2i} + ... + w_{An} \bullet x_{ni}$.

Similarly, a probability of the push message belonging to the category B, calculated by the second classifier, may be:

$$P_B(y_i = 1 \mid x_i) = \frac{1}{1 + e^{-f_B(x_i)}},$$

where, $f_B(x_i) = w_{B0} + w_{B1} \bullet x_{1i} + w_{B2} \bullet x_{2i} + ... + w_{Bn} \bullet x_{ni}$.

At last, a probability of the push message belonging to the category n, calculated by the second classifier, may be:

$$P_n(y_i = 1 \mid x_i) = \frac{1}{1 + e^{-f_n(x_i)}},$$

where, $f_n(x_i) = w_{n0} + w_{n1} \bullet x1i + w_{n2} \bullet x_{2i} + ... + w_{nn} \bullet x_{ni}$.

Afterward, based on these probabilities of the push message belonging to the respective categories, the second classifier may label the push message into the one of the categories having the greatest probability. In other words, when $P_A = \max \{P_A, P_B, ..., P_n\}$, the push message belongs to the category A.

In another embodiment, the classification means 410 may comprise a semantic analyzer configured to perform context-related examination on the push messages in terms of their structures so as to determine their categories. In yet another embodiment, the classification means 410 may comprise a matching module configured to perform regular expression matching on the push messages to determine whether they meet filtering logics of the regular expressions.

According to some embodiments, referring to FIG. 8, the intelligent reminder system 100 may further comprise updating means 340 adapted to update respective setting parameters of the classification means 410. Specifically, for example, for the first classifier, the updating means 340 may update its filtration parameters including whether the first classifier performs the filtration in a manner of one category after another or in a manner of one SMS message after another, and whether the first classifier performs the filtration by extracting a certain type of classification-related feature data from all SMS messages or by extracting all classification-related feature data from each SMS message. As another example, for the second classifier, the updating means 340 may update the weight values corresponding to the categories.

In another embodiment, the updating means 340 may also update the actions corresponding to the reminder messages.

After being obtained, the reminder messages and their corresponding categories are transmitted to the reminder means 140.

According to some embodiments, before the reminder messages and categories are sent to the reminder means 140, each of the reminder messages may be formed, by the structuring means 420, into a predetermined structure comprising the corresponding category.

For example, after being processed by the classification means 410, a push message from the number "10086", saying "The remaining account balance for your phone number 138xxxxxxxx is 5.76 Yuan, please recharge the account in a timely way to prevent undesirable disconnection of your phone. Thank you for your cooperation", may be obtained as a reminder message belonging to the category "ISP" and the structuring means 420 may form the reminder message, based on its content, into a predetermined structure such as, for example, a JSON formatted data schema:

```
{"sums_type": "ISP";
 "sms_data": {"name":" 13 8xxxxxxxx";
```

```
"need_charge": "true";
"account_amount":"5.76"}
}.
```

Structuring the reminder messages with the structuring means 420 allows other reception programs not designed for the reminder messages to receive and process such data, thereby generating uniform reminder indicators.

In one embodiment, in case of the reminder means 140 accomplishing the reminding in a manner of display, the structuring means 420 may structure the reminder messages depending on display means used by the reminder means 140 such as, for example, a display program for the reminder messages, such that the reminder messages can be read by the display program and displayed by a display device 140.

Subsequently, after receiving the structured reminder messages, the reminder means 140 can provide the reminder messages with different reminder indicators according to the respective categories to which they belong, so as to remind the user. The reminder indicators may be names, descriptions or so forth of the categories corresponding to the reminder messages.

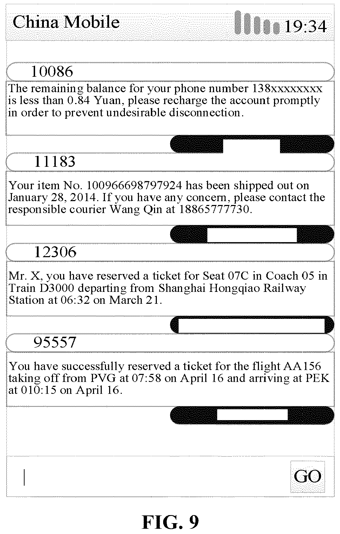

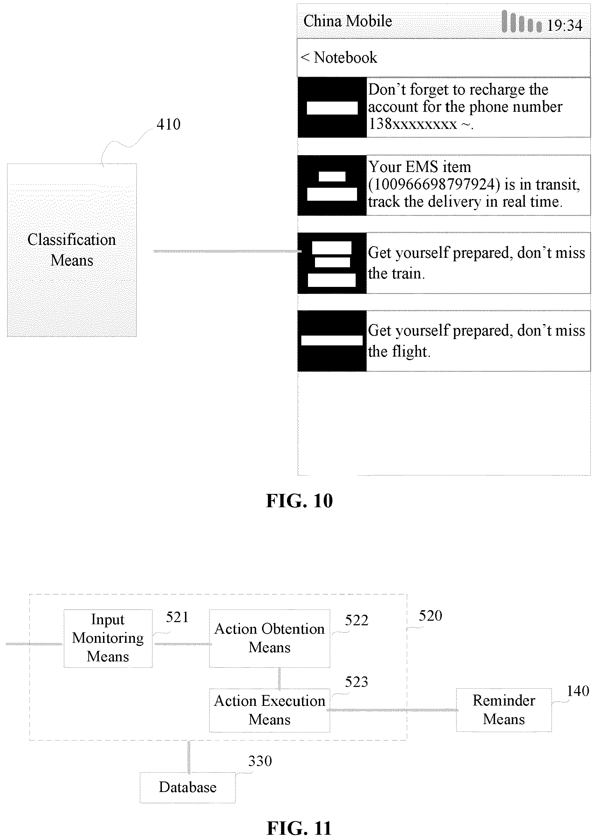

The reminder means 140 may accomplish the reminding by using either an interface of an existing application program such as, for example, Messaging or Notebook, or an otherwise designed interface. Referring to FIG. 9, according to some embodiments, the reminder means 140 may remind the user by displaying an interface of received SMS messages and scattering reminder indicators at locations in vicinity of the respective SMS messages. Referring to FIG. 10, according to some embodiments, the reminder means 140 may remind the user by collecting all reminder messages on an otherwise designed interface. On this interface, the reminder means 140 may display either both the reminder messages and the reminder indicators, or only the reminder indicators.

Referring to FIG. 11, the processor 220 may further comprise monitoring and execution means 520, with the reminder means 140 further including display means 510. In some embodiments, the display means 510 may visually display the reminder messages on a screen. In other embodiments, the display means 510 may also be implemented as playback or vibration means and may remind the user in the form of audios or the like.

According to some embodiments, the monitoring and execution means 520 may detect a further input of the user, acquire actions corresponding to reminder messages selected thereby and carry out the actions. In some embodiments, the monitoring and execution means 520 may include input monitoring means 521, action obtention means 522 and action execution means 523. The input monitoring means 521 may detect whether there is an input of the user. For example, when it detects that the user has performed a tapping, checking or another inputting operation that will result in the selection of one of the reminder messages on the screen by means of a finger or an input device such as a stylus, it may record a user input signal and transmit the recorded user input signal to the action obtention means 522. The action obtention means 522 may then determine, based on the received user input signal such as, for example, a coordinate or a pixel touched by the user, the reminder message selected by the user and obtain action(s) corresponding to that reminder message. The action execution means 523 may then carry out the action(s) obtained by the action obtention means 522, such as for example, opening an associated link, picture or text.

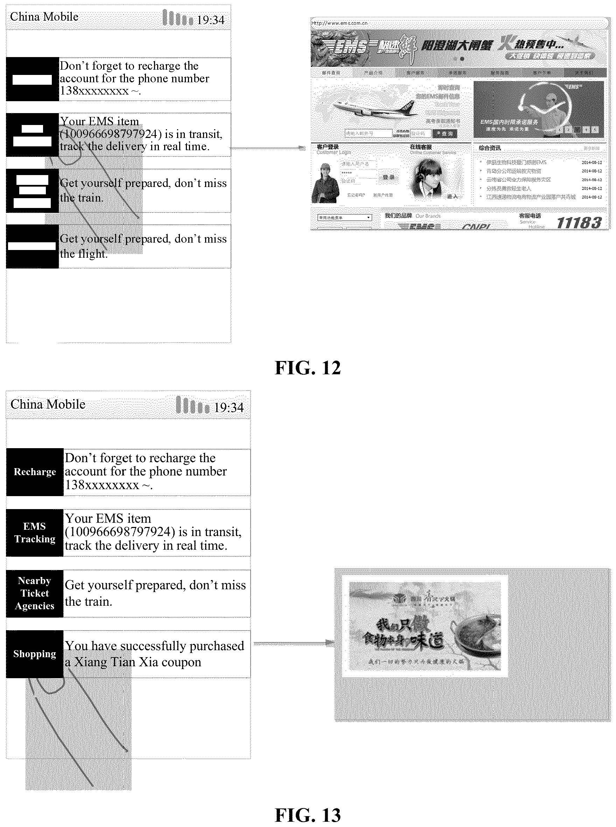

According to some embodiments, referring to FIG. 12, when detecting the user's selection of one of the reminder messages, the input monitoring means 521 may transmit a user input signal to the action obtention means 522. The action obtention means 522 may then analyze the user input signal and obtain the reminder message selected by the user as a reminder message belonging to the category "Express Delivery" and obtain action(s) corresponding to the reminder message, as well as data about the action(s), from the database 330. For example, the action(s) corresponding to the reminder message belonging to the category "Express Delivery" may be "to open a link to 'Delivery Tracking'", and the associated action data may be a tracking number. The action obtention means 522 may then transmit the associated link and action data to the action execution means 523, which may in turn open the link based on the action data and carry out an inquiry and display an inquiry results interface to the user.

According to some embodiments, referring to FIG. 13, when determining one of the reminder messages selected by the user as a reminder message belonging to the category "Shopping" on the basis of a user input signal detected by the input monitoring means 521, the action obtention means 522 may obtain action(s) corresponding to the reminder message, as well as data about the action(s), from the database 330. For example, the action(s) corresponding to the reminder message belonging to the category "Shopping" may be "to open a link to a purchased item", and the associated action data may be a picture of a group purchase coupon. The action obtention means 522 may then transmit the associated picture and action data to the action execution means 523, which may in turn open the picture file based on the action data and display the corresponding group purchase coupon picture to the user.

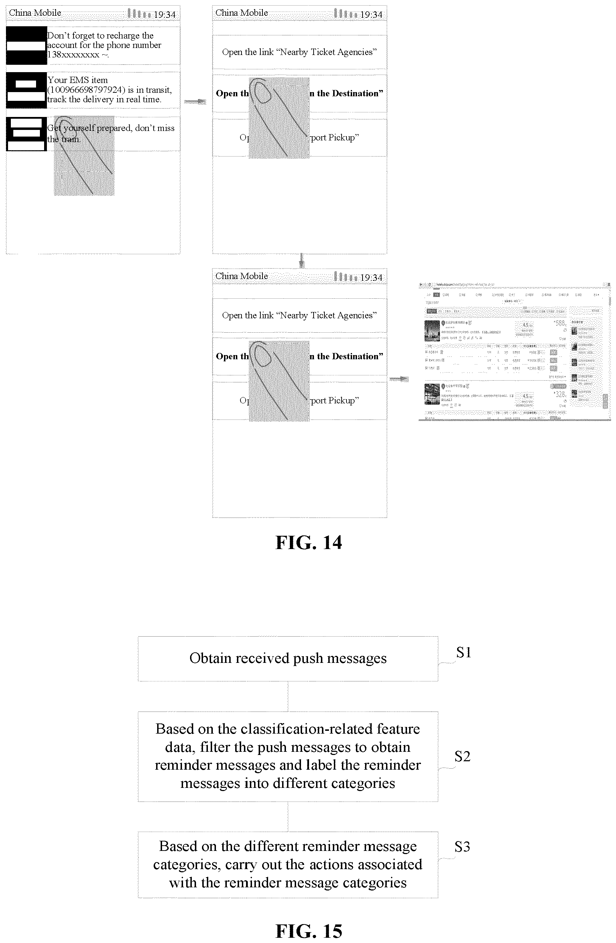

According to some embodiments, the action execution means 523 may perform further selection based on the user's input. Referring to FIG. 14, when obtaining one of the reminder messages selected by the user as a reminder message belonging to the category "Ticketing", the action obtention means 522 may obtain action(s) corresponding to the reminder message, as well as data about the action(s), from the database 330. For example, the action(s) corresponding to the reminder message belonging to the category "Ticketing" may be "to open a link to 'Nearby Ticket Agencies'", "to open a link to 'Destination'" and "to open a link to 'Airport Pickup'", and the associated action data may be "Current Position 'Xuhui District, Shanghai'" and "Destination 'Beijing'". The action obtention means 522 may then transmit the associated links and action data to the action execution means 523, which may in turn display these three actions to the user and detect an input signal thereof. When the action execution means 523 detects that the user's input signal is indicative of the selection of "Destination", the associated link to "Beijing" may be opened based on the associated action data "Destination 'Beijing'", as well as on "to open a link to 'Destination'", followed by displaying the results interface to the user.

Referring to FIG. 15, according to some embodiments of the present invention, there is provided an intelligent reminder method, comprising: a step S1 for obtaining received push messages, wherein the push messages comprises reminder messages, the reminder messages comprising classification-related feature data; a step S2 for filtering the push messages based on the classification-related feature data to obtain the reminder messages and labelling the reminder messages into different categories, wherein each of the reminder message categories is associated with at least one action; and a step S3 for carrying out the actions associated with the reminder message categories based on the different reminder message categories.

According to some embodiments, in an Andriod system, the push messages may be obtained by monitoring SMS messages of the system.

With the push messages having been obtained, based on the classification-related feature data, in one embodiment, the push messages may be filtered to obtain the reminder messages, and the reminder messages obtained from the filtration may be labelled, according to the classification-related feature data, into different categories. For example, in case of SMS messages, SMS messages can be labelled into different categories according to their sender numbers, contents, Short Message Base Station Service Center (SMBSSC) codes, and so forth. In another embodiment, the push messages may be classified to the categories based on the classification-related feature data, with those not belonging to any of the categories labelled as non-reminder messages.

Specifically, in one embodiment, the push messages may be examined, with those thereof containing the classification-related feature data that indicate predetermined categories labeled as reminder messages of the respective corresponding predetermined categories. In another embodiment, in case of the classification-related feature data being hybrid data, probabilities of the push messages belonging to the different categories may be calculated such that the push messages are labelled as reminder messages of the respective most probable categories. In yet another embodiment, semantic analysis may be performed on the contents of the push messages such as to label the push messages as reminder messages of the predetermined categories. In still another embodiment, regular expression matching may be performed on the contents of the push messages to determine whether there are contents identical or similar to the classification-related feature data of the predetermined categories.

According to some embodiments, the step S2 may further include an updating step for updating correspondence relationships between the classification-related feature data and the labelling categories or for updating the actions associated with the labelling categories.

With the reminder messages and their associated categories having been obtained, the actions associated with their categories can be carried out. Specifically, after the reminder messages have been presented to the user, an input of the user may be further detected, based on which a selected one of the reminder messages can be determined. Action(s) and action data associated with the selected reminder message may then be obtained, followed by execution of the associated action(s).

In one embodiment, the method may further comprise structuring the reminder messages and notifying the user in a predefined order and manner based on the different reminder message categories, after the obtention of the reminder messages.

Compared to the prior art, the present invention fully takes into account the characteristics of reminder messages, subjects the push messages to processing based on classification-related feature data so as to obtain reminder messages therefrom, classifies the reminder messages into different categories, and carries out actions corresponding to the different categories according to user inputs, thereby achieving intelligent reminding based upon the push messages.

While specific embodiments have been described above, it is to be understood that the present invention is not limited to the disclosed embodiments. Those skilled in the art can make various variations or modifications within the scope defined by the appended claims, which are, however, deemed not to affect the essence of the present invention.

**Claims**

1.  An intelligent reminder method, comprising:

    obtaining push messages received by an electronic device terminal, wherein the push messages comprises reminder messages, the reminder messages comprising classification-related feature data;

based on the classification-related feature data, filtering the push messages to obtain the reminder messages and labelling the reminder messages into different categories, wherein each of the reminder message categories is associated with at least one action; and

based on the different reminder message categories, carrying out the actions associated with the reminder message categories.

2. The intelligent reminder method according to claim 1, wherein carrying out the actions associated with the reminder message categories comprises: detecting whether there are triggering signals for the reminder messages; in the event of the triggering signals having been detected, obtaining the actions associated with the reminder message categories; and carrying out the associated actions.

3. The intelligent reminder method according to claim 2, wherein carrying out the actions associated with the reminder message categories further comprises: selecting corresponding associated actions according to the triggering signals.

4. The intelligent reminder method according to claim 1 or 2, wherein carrying out the actions associated with the reminder message categories comprises: structuring the reminder messages and notifying a user in a predefined order and manner based on the different reminder message categories.

5. The intelligent reminder method according to claim 1, wherein labelling the reminder messages into the different categories comprises: examining the push messages and, in the event of the push messages containing the classification-related feature data that indicate predetermined categories, labelling the push messages as reminder messages of the respective predetermined categories.

6. The intelligent reminder method according to claim 1, wherein labelling the reminder messages into the different categories comprises: in the event of the classification-related feature data being hybrid data, calculating probabilities of the push messages belonging to the different categories and labelling the push messages as reminder messages of the respective most probable categories.

7. The intelligent reminder method according to claim 1, wherein labelling the reminder messages into the different categories further comprises: performing an updating step to update correspondence relationships between the classification-related feature data and the labelling categories or to update the actions associated with the labelling categories.

8. The intelligent reminder method according to claim 1 or 4, wherein the classification-related feature data comprise message text, message sender information and Short Message Base Station Service Center (SMBSSC) coding.

9. The intelligent reminder method according to claim 1, wherein the push messages are Short Message Service (SMS) messages.

10. An intelligent reminder system, comprising:

message reception means, for receiving push messages associated with predetermined accounts;
detection means, for, based on classification-related feature data in the push messages, examining the push messages to obtain reminder messages and labelling the reminder messages into different categories, wherein reminder messages in each of the categories are associated with at least one action; and
reminder means for reminding a user based on the reminder messages.

11. The intelligent reminder system according to claim 10, wherein the detection means further comprises a classification means adapted to examine and classify the push messages based on the classification-related feature data.

12. The intelligent reminder system according to claim 11, wherein the classification means comprises a first classifier, or a second classifier, or a combination thereof, wherein the first classifier examines the push messages and, in the event of having detected the presence of predetermined classification-related feature data in the push messages, to label the push messages as reminder messages belonging to categories associated with the classification-related feature data, and wherein the second classifier extracts classification-related feature data from the push messages, calculates probabilities of the push messages belonging to the categories and labels the push messages as reminder messages of the respective most probable categories.

**13.** The intelligent reminder system according to claim 11, wherein the detection means further comprises updating means adapted to update correspondence relationships between the classification-related feature data and the labelling categories or to update the actions associated with the labelling categories.

**14.** The intelligent reminder system according to claim 11, wherein the detection means further comprises structuring means adapted to structure each of the reminder messages into data models with predetermined structures, and wherein the predetermined structures comprise the categories corresponding to the reminder messages.

**15.** The intelligent reminder system according to claim, wherein the detection means further comprises monitoring and execution means adapted to monitor a further input of the user, obtain action(s) corresponding to a selected one of the reminder messages by the user, and carry out the action(s).

**16.** The intelligent reminder system according to claim, wherein the detection means further comprises: filtration means adapted to filter the push messages based on the classification-related feature data to obtain the reminder messages; and labelling means adapted to label, based on the classification-related feature data, the reminder messages into different categories, and wherein each of the categories is associated with at least one predetermined action.

101

Sender: XXXXXXXXX
Content: XXXXXX
XXXXXXXXXXXXX

110

Detection
Means
120

130

Cloud Detection Means

140

Reminder Means

110

150

| Action 1 | Action 2 | Action n |

**FIG. 1**

210
Reception Means

231
Communication
Interface

230

140
Reminder Means

220
Processor

240
Memory

**FIG. 2**

| Reminder message | Keywords | Sender Number | SMBSSC Code | Message Text | Category Identifier | Category Description | Associated Action | Action Data |
|---|---|---|---|---|---|---|---|---|
| Message A | Remaining Balance, Yuan, recharge | 10086 | AGGHHX | "The remaining balance for your phone number 138xxxxxxxx is less than 0.84 Yuan, please recharge the account" | ISP | Don't forget to recharge the account for the phone number 138xxxxxxxx ~. | To open the link "Recharge" | A default recharge amount of 50 Yuan |
| Message B | Delivery, shipment, tracking number, in transit | 11183 | BGAGRR | "Your item No. 100966698797924" has been shipped out on January 28, 2014. If you have any concern, please contact the responsible courier Wang Qin at 18865777730 | Express Delivery | Your EMS item (100966698797924) is in transit, track the delivery in real time. | To open a EMS tracking link | 1009666987 97924 |
| Message C | Reserved, Train ?, ? | 12306 | BHAZIN | "Mr. X, you have reserved a ticket for Seat 07C in Coach 05 in Train D3002 departing from Shanghai Hongqiao Railway Station at 06:32 on March 21" | Ticketing | Get yourself prepared, don't miss the train. | To open the link "Nearby Ticket Agencies" | Current GPS values |
| Message D | Flight, ticket, taking off, itinerary, board | 95557 | BHOMNE | "You have successfully reserved a ticket for the flight AA156 taking off from PVG at 07:58 on April 16 and arriving at PEK at 010:15 on April 16" | Ticketing | Get yourself prepared, don't miss the flight. | Open the "Destinatio n" link | Beijing |

**FIG. 3**

**FIG. 4**

Reception
Means          210

Communication
Interface       231

Filtration
Means          310

Labelling
Means          320

Reminder
Means          140

Database       330

**FIG. 5**

Reception
Means          210

Classification
Means          410

Structuring
Means          420

Reminder Means  140

Database       330

**FIG. 6**

China Mobile 19:34

10086
The remaining balance for your phone
number 138xxxxxxxx is less than 0.84
Yuan, please recharge the account
promptly in order to prevent undesirable
disconnection.

11183
Your item No. 100966698797924 has
been shipped out on January 28, 2014. If
you have any concern, please contact the
responsible courier Wang Qin at
18865777730.

12306
Mr. X, you have reserved a ticket for
Seat 07C in Coach 05 in Train D3002
departing from Shanghai Hongqiao
Railway Station at 06:32 on March 21.

95557
You have successfully reserved a ticket
for the flight AA156 taking off from
PVG at 07:58 on April 16 and arriving at
PEK at 10:15 on April 16.

GO

ISP

Express Delivery

Classification
Means

Ticketing

Shopping

**FIG. 7**

Reception
Means 210
Classification
Means 410
Structuring
Means 420
Reminder
Means 140

Updating
Means 340
Database 330

**FIG. 8**

China Mobile       ▌▌▌▌▋ 19:34

10086

The remaining balance for your phone number 138xxxxxxxx is less than 0.84 Yuan, please recharge the account promptly in order to prevent undesirable disconnection.

11183

Your item No. 100966698797924 has been shipped out on January 28, 2014. If you have any concern, please contact the responsible courier Wang Qin at 18865777730.

12306

Mr. X, you have reserved a ticket for Seat 07C in Coach 05 in Train D3000 departing from Shanghai Hongqiao Railway Station at 06:32 on March 21.

95557

You have successfully reserved a ticket for the flight AA156 taking off from PVG at 07:58 on April 16 and arriving at PEK at 010:15 on April 16.

GO

**FIG. 9**

410

Classification
Means

China Mobile ▐▐▐▐▮ 19:34

< Notebook

Don't forget to recharge the
account for the phone number
138xxxxxxxx ~.

Your EMS item
(100966698797924) is in transit,
track the delivery in real time.

Get yourself prepared, don't miss
the train.

Get yourself prepared, don't miss
the flight.

**FIG. 10**

Input
Monitoring
Means

521

Action Obtention
Means

522

520

523

Action Execution
Means

Reminder
Means

140

330

Database

**FIG. 11**

| | |
|---|---|
| China Mobile ▮▮▮▮ 19:34 | Http://www.ems.com.cn |
| ■ Don't forget to recharge the account for the phone number 138xxxxxxxx ~. | |
| ■ Your EMS item (100966698797924) is in transit, track the delivery in real time. | |
| ■ Get yourself prepared, don't miss the train. | |
| ■ Get yourself prepared, don't miss the flight. | |

**FIG. 12**

| | |
|---|---|
| China Mobile ▮▮▮▮ 19:34 | |
| **Recharge** — Don't forget to recharge the account for the phone number 138xxxxxxxx ~. | |
| **EMS Tracking** — Your EMS item (100966698797924) is in transit, track the delivery in real time. | |
| **Nearby Ticket Agencies** — Get yourself prepared, don't miss the train. | |
| **Shopping** — You have successfully purchased a Xiang Tian Xia coupon | |

**FIG. 13**

| China Mobile 19:34 |
|---|
| Don't forget to recharge the account for the phone number 138xxxxxxxx ~. |
| Your EMS item (100966698797924) is in transit, track the delivery in real time. |
| Get yourself prepared, don't miss the train. |

| China Mobile 19:34 |
|---|
| Open the link "Nearby Ticket Agencies" |
| **Open th** **n the Destination"** |
| Oj port Pickup" |

| China Mobile 19:34 |
|---|
| Open the link "Nearby Ticket Agencies" |
| **Open th** **n the Destination"** |
| Oj port Pickup" |

**FIG. 14**

```
Obtain received push messages                              S1

Based on the classification-related feature
data, filter the push messages to obtain
reminder messages and label the reminder        S2
messages into different categories

Based on the different reminder message         S3
categories, carry out the actions associated
with the reminder message categories
```

**FIG. 15**

# INTERNATIONAL SEARCH REPORT

| International application No. |
|---|
| **PCT/CN2015/089909** |

**A. CLASSIFICATION OF SUBJECT MATTER**

H04W 4/12 (2009.01) i

According to International Patent Classification (IPC) or to both national classification and IPC

**B. FIELDS SEARCHED**

Minimum documentation searched (classification system followed by classification symbols)

H04W; H04L; G06F

Documentation searched other than minimum documentation to the extent that such documents are included in the fields searched

Electronic data base consulted during the international search (name of data base and, where practicable, search terms used)

CNPAT, CNKI: type, relevancy, remind, message, filter, information, identification, short message, number, text, keyword, classification, prompt, shopping, ticket business, express delivery, operate, APPLE, SAMSUNG, NOKIA, HUAWEI, ZTE, XIAOMI, e-mail, instant messenger

EPODOC, WPI: message, relate, mark, identify, sign, number, keyword, shopping, ticket, mail, warn, remind, class, label

**C. DOCUMENTS CONSIDERED TO BE RELEVANT**

| Category* | Citation of document, with indication, where appropriate, of the relevant passages | Relevant to claim No. |
|---|---|---|
| PX | CN 104507165 A (SHANGHAI CHULE (COOTEK) INFORMATION TECHNOLOGY CO., LTD.), 08 April 2015 (08.04.2015), claims 1-16 | 1-16 |
| PX | CN 104184887 A (XIAOMI TECHNOLOGY CO., LTD.), 03 December 2014 (03.12.2014), description, paragraphs 69-85, and figure 1 | 1-16 |
| X | CN 103929537 A (SENSELOCK TECHNOLOGY CO., LTD.), 16 July 2014 (16.07.2014), description, paragraphs 9-14, and figure 1 | 1-16 |
| X | CN 103167434 A (ZHUHAI KINGSOFT OFFICE SOFTWARE CO., LTD. et al.), 19 June 2013 (19.06.2013), description, paragraphs 26-27, and figures 1 and 2 | 1-16 |
| A | EP 2299710 A1 (TELEFONAKTIEBOLAGET LM ERICSSON), 23 March 2011 (23.03.2011), the whole document | 1-16 |
| A | CN 102256012 A (ZTE CORP.), 23 November 2011 (23.11.2011), the whole document | 1-16 |

☒ Further documents are listed in the continuation of Box C.  ☒ See patent family annex.

| | |
|---|---|
| * Special categories of cited documents:<br><br>"A" document defining the general state of the art which is not considered to be of particular relevance<br><br>"E" earlier application or patent but published on or after the international filing date<br><br>"L" document which may throw doubts on priority claim(s) or which is cited to establish the publication date of another citation or other special reason (as specified)<br><br>"O" document referring to an oral disclosure, use, exhibition or other means<br><br>"P" document published prior to the international filing date but later than the priority date claimed | "T" later document published after the international filing date or priority date and not in conflict with the application but cited to understand the principle or theory underlying the invention<br><br>"X" document of particular relevance; the claimed invention cannot be considered novel or cannot be considered to involve an inventive step when the document is taken alone<br><br>"Y" document of particular relevance; the claimed invention cannot be considered to involve an inventive step when the document is combined with one or more other such documents, such combination being obvious to a person skilled in the art<br><br>"&" document member of the same patent family |

| Date of the actual completion of the international search | Date of mailing of the international search report |
|---|---|
| 15 November 2015 (15.11.2015) | **17 December 2015 (17.12.2015)** |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>**KONG, Wei**<br><br>Telephone No. (86-10) **01061648128** |

Form PCT/ISA/210 (second sheet) (July 2009)

# INTERNATIONAL SEARCH REPORT

International application No.

**PCT/CN2015/089909**

**C (Continuation). DOCUMENTS CONSIDERED TO BE RELEVANT**

| Category* | Citation of document, with indication, where appropriate, of the relevant passages | Relevant to claim No. |
|---|---|---|
| A | CN 101631155 A (SHANGHAI LG ELECTRONICS CO., LTD.), 20 January 2010 (20.01.2010), the whole document | 1-16 |

Form PCT/ISA/210 (continuation of second sheet) (July 2009)

## INTERNATIONAL SEARCH REPORT
### Information on patent family members

| International application No. |
|---|
| **PCT/CN2015/089909** |

| Patent Documents referred in the Report | Publication Date | Patent Family | Publication Date |
|---|---|---|---|
| CN 104507165 A | 08 April 2015 | None | |
| CN 104184887 A | 03 December 2014 | None | |
| CN 103929537 A | 16 July 2014 | None | |
| CN 103167434 A | 19 June 2013 | None | |
| EP 2299710 A1 | 23 March 2011 | RU 2012116122 A | 27 October 2013 |
| | | DK 2299710 T3 | 31 March 2014 |
| | | JP 2013504249 A | 04 February 2013 |
| | | WO 2011037520 A1 | 31 March 2011 |
| | | CN 102577426 A | 11 July 2012 |
| | | US 2012143976 A1 | 07 June 2012 |
| | | NZ 597743 A | 27 June 2014 |
| | | IL 218028 A | 31 May 2015 |
| CN 102256012 A | 23 November 2011 | None | |
| CN 101631155 A | 20 January 2010 | None | |

Form PCT/ISA/210 (patent family annex) (July 2009)